# EUROPEAN PATENT APPLICATION

(11) **EP 2 091 041 A1**
(43) Date of publication of application: **19.08.2009**
(21) Application number: 08002224.7
(22) Date of filing: 07.02.2008
(51) Int. Cl.: G11B 7/0037, G11B 7/24, G11B 7/26

(54) **A method for producing optical discs**

(71) Applicant: DPHI, Inc., Longmont, CO 80501 (US)
(72) Inventor: Steynor, James, Ross-on-Wye Heresfordshire HR9 6BZ (GB); Pohl, Peter, 6491 Mils bei Imst (AT)
(74) Representative: Torggler, Paul Norbert

(57) **Abstract**

A method for producing optical discs comprising:
- at least one foil (3),
- at least one layer of adhesive (4),
- a carrier layer (7),

characterised by the following steps:
- copying a pit structure of an optical stamper (2) by applying the at least one foil (3) and/or by applying the at least one layer of adhesive (4) and/or by applying the carrier layer (7) on the pit structure of the optical stamper (2),
- removing the at least one foil (3) and/or the at least one layer of adhesive (4) and/or the carrier layer (7) from the pit structure of the optical stamper (2),
- joining the carrier layer (7) with the at least one foil (3) and the at least one layer of adhesive (4).

## Description

The present invention relates to a method for producing optical discs.

The production process of any optical disc consists of two distinct steps. In the first step, called mastering, the prototype of the optical medium, which is called optical stamper, has to be generated. These optical stampers are parts made of metal or glass or of plastics, which are produced and duplicated by means of exposure to light, etching, plasma etching, vacuum metallizing, partial evaporation, or electrochemically (galvanically). These and the end-products made from them (optical discs or replica) contain mechanical structures ("pits" and "grooves", called pit structure in the following) which represent the information that is to be read out.

After the pit structure of the optical stamper is examined in great detail, the finished optical discs are produced in a second step of the production process, the manufacturing process. In prior art, the finished optical discs are produced by injection moulding using the above optical stamper. This method is particularly advantageous if a large number of items is to be produced by means of one optical stamper. Nevertheless, if only a smaller number of items is to be produced with one optical stamper, manufacturing by injection moulding is expensive.

An object of the present invention is to provide an easy method for producing replica, allowing for a cost efficient production of finished optical discs in particular if only a smaller number of items is to be produced.

To achieve the above objective the present invention provides a method for producing optical discs, comprising:
- at least one foil,
- at least one layer of adhesive,
- a carrier layer,
characterised by the following steps:
- copying a pit structure of an optical stamper by applying the at least one foil and/or by applying the at least one layer of adhesive and/or by applying the carrier layer on the pit structure of the optical stamper,
- removing the at least one foil and/or the at least one layer of adhesive and/or the carrier layer from the pit structure of the optical stamper,
- joining the carrier layer with the at least one foil and the at least one layer of adhesive.

The method of the present invention realizes that applying at least one foil on the pit structure of an optical stamper provides a simple method for copying the pit structure of the optical stamper. Additionally or alternatively the pit structure of the optical stamper could also be copied to a layer of adhesive, which is joined with a carrier layer, which is necessary for the optical disc to guarantee mechanical stability as the disc is read in usual reading devices for optical discs, and the at least one foil. Additionally or alternatively it is also possible to copy the pit structure of the optical stamper to the carrier layer, and join the carrier layer afterwards with the at least one foil and the at least one layer of adhesive.

A proper choice of the material of the foil and/or the layer of adhesive and/or the carrier layer depending on the kind of optical medium to be produced provides that the length of the optical path for the laser, reading out the data from the pit structure, is substantially equal as in optical discs produced by injection moulding.

The method of the present invention is applicable to all kinds of optical discs, for instance CD, DVD, high density DVD (HD DVD), blue ray discs (BD) and the like; with all possible formats, e.g. video, audio, ROM and the like; as well as in single layer or multi layer format.

Further preferred embodiments of the present invention are discussed below.

In a particularly preferred embodiment of the invention, the foil is applied to the pit structure of an optical stamper. In a preferred embodiment of the invention the foil is flexible made from a preformed body and has a pre-shaped form. Thus, by impressing the foil onto the pit structure of the optical stamper, the pit structure is copied to the foil. After removing the foil from the pit structure of the optical stamper a carrier layer is joined with the foil by a layer of adhesive, which in this embodiment has the role of a bonding layer. However, it is also possible, that the carrier layer is already joined with the foil, by means of a layer of adhesive, bonding the foil to the carrier layer, before it is applied to the pit structure of the optical stamper. Particularly preferred embodiments of this carrier layer are discussed below.

Particularly it is possible to emboss the pit structure of the optical stamper to a foil during the application of the foil on the optical stamper. In a particular embodiment of the present invention, the application of the foil on the pit structure of the optical stamper could comprise a pressure-sensitive adhesive embossing process. In this embodiment of the invention a bond between the foil and the optical stamper is provided without additional adhesives. Due to this bond the pit structure of the optical stamper is copied very accurately to the foil. Since no additional adhesives are necessary, the foil can simply be removed by mechanical means.

In another embodiment of the present invention, the foil comprises a layer of adhesive, which is is preferably transparent and applied to the signal face of the optical stamper. It will be appreciated that in this embodiment of the invention, the pit structure of the optical stamper is copied to the layer of adhesive, preferably by means of embossing. The carrier layer can be joined with the foil and the layer of adhesive before or after the pit structure of the optical stamper is copied to the layer of adhesive. If the layer of adhesive is particularly thin, the pit structure of the optical stamper is copied to the layer of adhesive and the foil or to the layer of adhesive and the carrier layer. It will be appreciated that this connection of the foil comprising a layer of adhesive to which the pit structure of the optical stamper is copied and the carrier layer can be effected by an another layer of adhesive, having the role of a bonding layer.

It could also be advantageous that a layer of adhesive is first applied to the pit structure of the optical stamper, preferably after joining the layer of adhesive with a carrier layer, and then applied to the foil. However, it also possible to apply the layer of adhesive to the foil, before or after applying the layer of adhesive to the pit structure of the optical stamper and then join them with a carrier layer.

In another embodiment of the invention, the pit structure of the optical stamper is copied to the carrier layer, preferably by means of embossing. In this embodiment, a foil is joined with the carrier layer, by means of a layer of adhesive, after the application of the carrier layer to the pit structure of the optical stamper.

In cases where a layer of adhesive is directly applied to the signal surface of the optical stamper, it could be necessary to cure the layer of adhesive before the layer of adhesive, which may also have been applied to a carrier layer or a foil, in order to remove the layer of adhesive, from the optical stamper. In a particularly preferred embodiment of the invention, the layer of adhesive comprises of adhesives which harden upon UV radiation. Hence, the curing process in this embodiment of the invention is effected by irradiating UV radiation onto the layer of adhesive.

It could further be advantageous that the foil comprises a hard coat, preferably on the side opposing the side of the foil where the pit structure of the optical stamper is copied on or the layer of adhesive, containing a copy of the pit structure of the optical stamper. This hard coat has the function to protect the coat from mechanical damages as scratches and the like. This hard coat preferably comprises a material with a high hardness. In a particular embodiment the carrier layer is realized by a hard coat.

In a particular example of the embodiment of the present invention, the foil comprises a layer of polycarbonate with a thickness between 70 µm and 100 µm, a layer of adhesive, curable by UV radiation, with a thickness between 5 µm and 25 µm and a hard coat with a thickness between 1 µm and 10 µm. In this particular example the total thickness of the foil is between 70 µm and 135 µm and all of the layers mentioned above have an index of refraction of substantially 1.5.

It could be advantageous that a reflection layer is applied to the pit structure of the foil and additionally or alternatively to a layer of adhesive and additionally or alternatively to the carrier layer, after they have been removed from the optical stamper. Since the reflection layer is very thin, it does not fill out the pits and grooves of the pit structure and thereby establishing a plane surface, but nestles to the copy of the pit structure in the foil or the layer of adhesive and thus following the surface of the copy of the pit structure. Thus it could also be possible that the reflection layer lies between the foil and the layer of adhesive and/or between the carrier layer and the layer of adhesive and is applied to the foil and/or the carrier layer, possibly with additional layers of adhesive before it is applied to the pit structure of the optical stamper. During the read-out process, an optical head sends out and detects laser beams, which are reflected at such a reflection layer. Thus, if a layer of adhesive is on the remote side from the optical head, it may be not necessary that this layer of adhesive is transparent. The thickness of the reflection layer could be between 0.1 µm and 10 µm, preferably between 0.5 µm and 5 µm.

In a preferred embodiment of the invention a carrier layer is joined with the foil, by means of a layer of adhesive. Furthermore, one or several reflection layers can be implemented, possibly with additional layers of adhesives, acting as bonding layers. It will be appreciated that all possible combinations of foils, carrier layers, reflection layers and layers of adhesives, where at least one of them contains a copy of the pit structure of an optical stamper according to the method of the present invention are possible. It could be advantageous that the carrier layer comprises solid material. In particular, the carrier layer could be a solid disc. In another embodiment of the invention the carrier layer comprises a layer of lacquer preferably on the side of the pit structure of the foil in order to protect the pit structure of the foil. It is also possible that the carrier layer is realized by a hard coat, as mentioned above.

The thickness of the carrier layer which could comprise a layer of adhesive depends on the kind of optical discs which are to be produced. For DVDs and HD DVDs a carrier layer which could comprise a layer of adhesive has a thickness between 0.2 and 1 mm, preferably between 0.4 mm and 0.8 mm. For BDs the carrier layer has a thickness between 0.7 mm and 1.5 mm, preferably between 0.9 mm and 1.3 mm. For CDs it is possible to realize the carrier layer by a hard coat, preferably with a thickness between 0.5 µm and 10 µm, preferably between 1 µm and 7 µm.

It could further be advantageous that the foil, the layer of adhesive and the carrier layer are joined with a cover layer particularly on the side, which lies next to the optical head during the read-out process. In a preferred embodiment of the invention this cover layer comprises transparent material and/or a hard coat on its outer side. Obviously according to the core of the present invention it also possible to apply a layer of adhesive first to the cover layer, copy the pit structure to this layer of adhesive and then join them with a foil and the carrier layer. The thickness of this cover layer provides the necessary modifications of the length of the optical path for the read-out process. Hence, it again depends on the kind of optical discs which are to be produced. For CDs the cover layer has a thickness between 0.7 mm and 1.5 mm, preferably between 0.9 mm and 1.3 mm. For DVDs and HD DVDs the cover layer has a thickness between 0.1 mm and 1 mm, preferably between 0.3 mm and 0.8 mm. For BDs the cover layer has a thickness between 10 µm and 0.5 mm, preferably between 50 µm and 0.15 mm.

It will be appreciated that according to the method as described above, also multi-layer, in particular dual-layer or double layer, optical discs can be produced. This can be effected, by copying the pit structure of a first optical stamper to a first foil or a first layer of adhesive applied to a foil. The pit structure of a second optical stamper is copied to a second foil or a second layer of adhesive applied to the second foil. It will be advantageous that the foil, which in the read out process will be nearer to the optical head comprises a semi-reflective layer and the other foil comprises a reflection layer. After the pit structures of the first and the second optical stamper are copied, the two foils are bond by an additional layer of adhesive. The carrier layer and/or a cover layer are joined with the two foils, possibly by other layers of adhesive. The reflective and the semi-reflective layer preferably have a thickness between 0.5 µm and 5 µm.

Another alternative possibility for producing double or dual layer discs is to copy the pit structure of a first optical stamper to the foil or to the carrier layer and the pit structure of a second optical stamper to a layer of adhesive which is joined to the foil or the carrier layer containing a copy of the first optical stamper, possibly separated by a reflective and/or a semi-reflective layer and possibly by means of an additional layer of adhesive.

Alternatively the pit structure of a first optical stamper is copied to a foil or a layer of adhesive, which is applied to the foil. The pit structure of a second optical stamper is copied to a carrier layer or a layer of adhesive, which is applied to the carrier layer. Then both parts are joined, preferably with an additional layer of adhesive, whereat the part lying closer to the optical head during the read-out process could comprise a semi-reflective layer and the other part could comprise a reflection layer.

Further advantages and details of the invention will be apparent by reference to the specific description and the accompanying figures in which:
- Fig. 1 a, 1 b: show the top and the bottom side respectively of the foil in a particularly preferred embodiment of the invention,

- Fig. 2a-2h: show the steps of the method of the present invention in a particularly preferred embodiment,
- Fig. 3: shows an optical disc, produced according to a particular embodiment of the method of the present invention,
- Fig. 4: shows a CD, produced according to a particular embodiment of the method of the present invention,
- Fig. 5: shows a DVD, produced according to a particular embodiment of the method of the present invention,
- Fig. 6: shows a dual layer BD, produced according to a particular embodiment of the method of the present invention,
- Fig.7: shows a dual layer BD, produced according to another particular embodiment of the method of the present invention,
- Fig. 8: shows a dual layer DVD, produced according to a particular embodiment of the method of the present invention,
- Fig.9: shows a dual layer DVD, produced according to another particular embodiment of the method of the present invention.

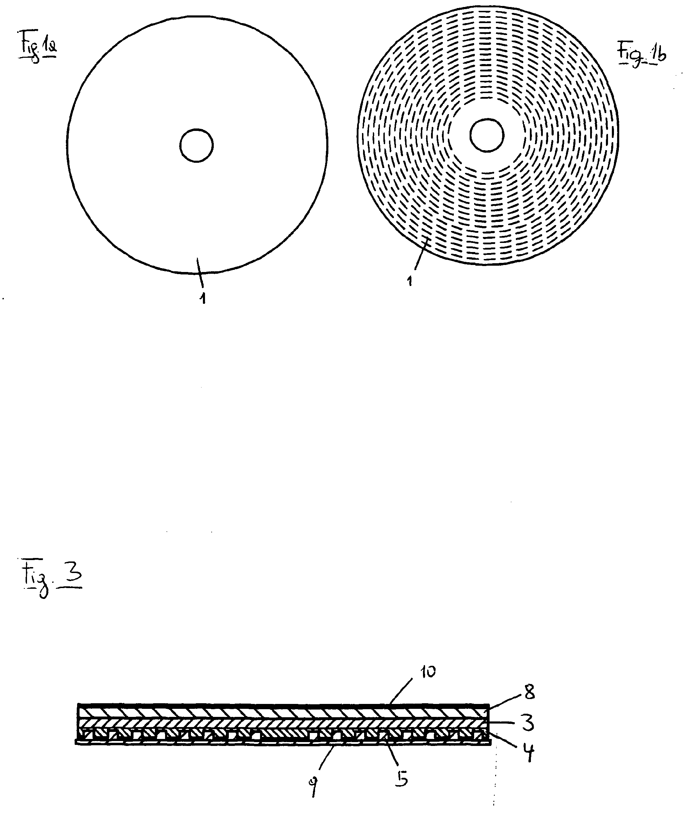

Fig. 1 a shows the plane top side of a foil 1 for optical discs in a preferred embodiment of the invention after said foil 1 has been removed from the optical stamper. Fig. 1b shows the pit structure of foil 1 which corresponds to the pit structure of the optical stamper 2 on the bottom side of foil 1 in a preferred embodiment of the present invention.

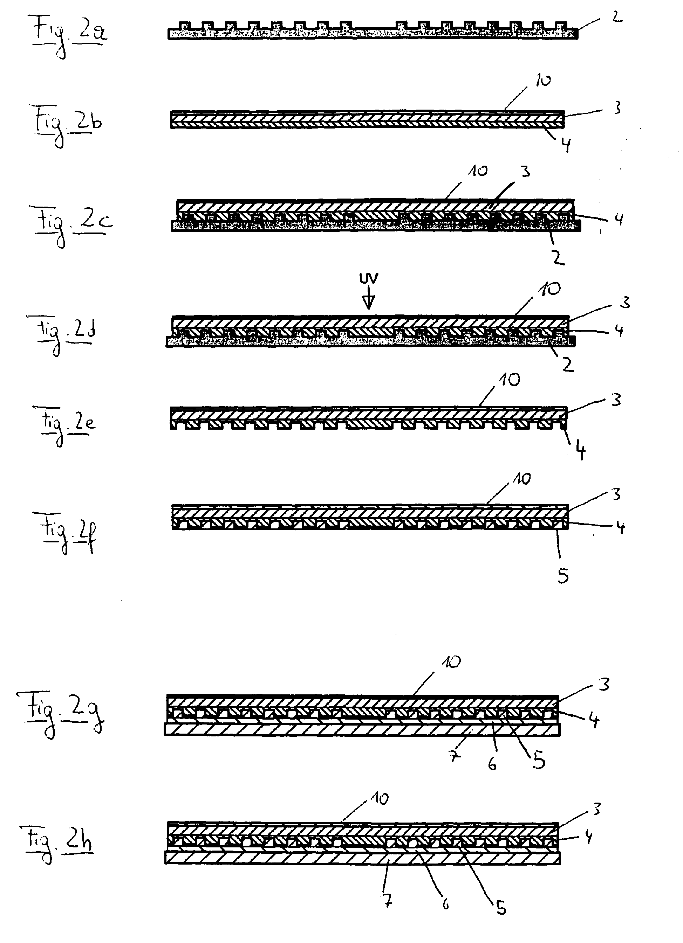

Fig. 2a-2h show the steps of a particularly preferred embodiment of the method of the present invention. Fig. 2a shows the optical stamper 2. Fig. 2b shows a foil 3 to which a layer of adhesive 4 and a hard coat 10 has been applied. In Fig. 2c the foil 3, the layer of adhesive 4 and the hard coat 10 are applied to the optical stamper 2. The layer of adhesive 4 is cured by means of UV-radiation as shown in Fig. 2d. Fig. 2e shows the pit structure in the layer of adhesive 4 which corresponds to the pit structure of the optical stamper 2 after the layer of adhesive 4 and the foil 3 have been removed from the optical stamper 2. In Fig. 2f a reflection layer 5 is applied to the foil 3, the layer of adhesive 4 and the hard coat 10. In Fig. 2g a carrier layer 7 comprising a layer of adhesive 6 is joined with the foil 3, by adhering it to the reflection layer 5. In Fig. 2h a cover layer 8 is applied to the foil 3.

Fig. 3 shows an optical disc, produced according to a particular embodiment of the method of the present invention. Here, the cover layer 8 is thicker than in Fig. 2h. The carrier layer is realized by a layer of lacquer 9.

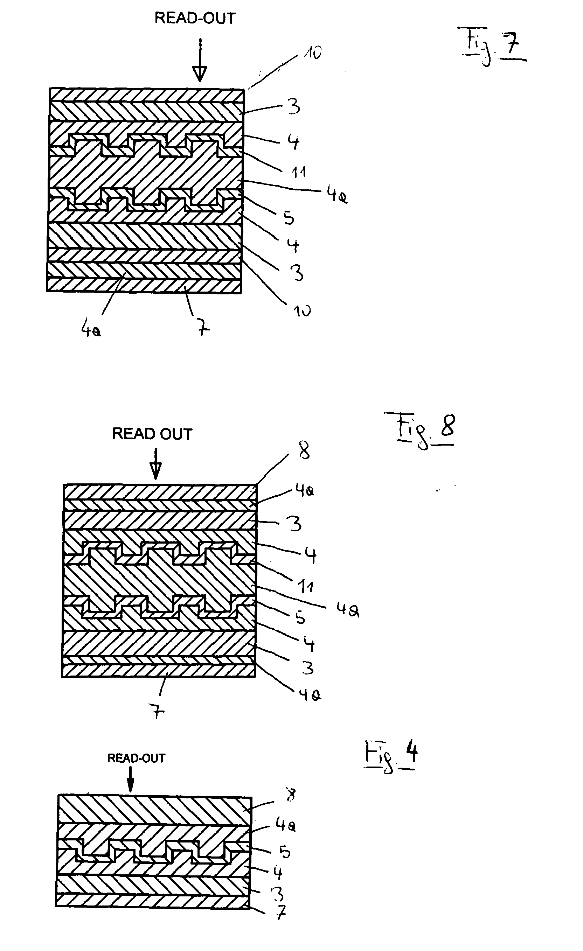

In Fig. 4 to Fig. 9 several discs, produced according to particular embodiments of the method of the present invention are shown. In Fig. 4 a CD is shown, where the laser beam reading out the date from the pit structure impinges from the top side of the figure. The CD comprises a foil 3 of 80 µm, which itself comprises a hard coat of 5 µm, which realizes a carrier layer 7. A layer of adhesive 4 of 15 µm has been applied to the foil 3. Furthermore the layer of adhesive 4 has been applied to the pit structure of an optical stamper 2 in order to copy this pit structure to this layer of adhesive 4. After removing the layer of adhesive 4 from the optical stamper 2, a reflection layer 5 of 2 µm has been applied to the layer of adhesive 4. Finally a cover layer 8 of 1.1 mm has been joined, by means of an additional layer of adhesive 4a of 30 µm.

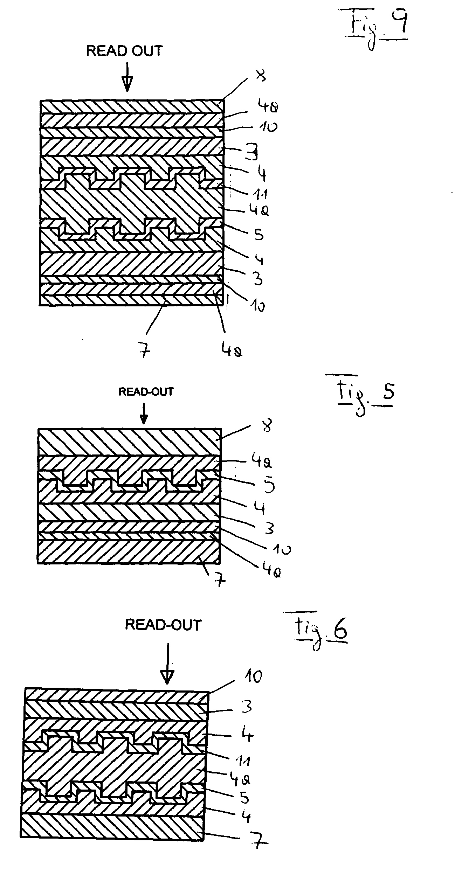

In Fig. 5 a DVD is shown, to be read-out from the top side of the figure. A foil 3 of 80 µm, comprising a hard coat 10 of 5 µm is joined with a carrier layer 7 of 0.6 mm, by means of a layer of adhesive 4a of 30 µm. The pit structure of an optical stamper 2 has been copied to a layer of adhesive 4 of 15 µm, to which a reflection layer 5 of 2 µm has been applied. Finally a cover layer 8 of 0.5 mm has been joined, by means of an additional layer of adhesive 4a of 30 µm.

Fig. 6 shows a first embodiment of a dual layer BD, produced according to the method of the present invention. The pit structure of a first optical stamper 2 has been copied to a layer of adhesive 4 of 15 µm, which has been applied to a foil 3 of 80 µm, comprising a hard coat 10 of 5 µm. Then a semi-reflective layer 11 of 1 µm has been applied to the layer of adhesive 4. Furthermore, the pit structure of a second optical stamper 2 has been copied to another layer of adhesive 4 of 15 µm, which has been applied to a carrier layer 7 of 1.05 mm. A reflection layer 5 of 2 µm has been applied to the copy of the pit structure of the second optical stamper 2. Finally, both parts have been joined, by means of another layer of adhesive 4a of 30 µm, binding the reflective layer 5 and the semi-reflective layer 11.

Fig. 7 shows a second embodiment of a dual layer BD, produced according to the method of the present invention. The structure of the part containing the copy of a first optical stamper is identically to those shown in Fig. 6. The layer of adhesive 4 of 15 µm to which the pit structure of a second optical stamper 2 has been copied, has been applied to a foil 3 of 80 µm, comprising a hard coat 10 of 5 µm. A reflection layer 5 of 2 µm has been applied to the copy of the pit structure of the second optical stamper 2. By means of an additional layer of adhesive 4a of 30 µm a carrier layer 7 of 0.95 mm has been joined. Both parts have been joined, by means of another layer of adhesive 4a of 30 µm, binding the reflective layer 5 and the semi-reflective layer 11.

Fig. 8 shows a second embodiment of a dual layer DVD, produced according to the method of the present invention. The pit structure of a first optical stamper 2 has been copied to a layer of adhesive 4 of 15 µm, which has been applied to a foil 3 of 80 µm. Then a semi-reflective layer 11 of 1 µm has been applied to the layer of adhesive 4. On the opposite side of this semi-reflective layer 11, a cover layer 8 of 0.5 mm has been joined, by means of an additional layer of adhesive 4a of 30 µm. Furthermore, the pit structure of a second optical stamper 2 has been copied to another layer of adhesive 4 of 15 µm, which has been applied to another foil 3 of 80 µm. A reflection layer 5 of 2 µm has been applied to the copy of the pit structure of the second optical stamper 2. On the opposite side of this reflection layer 5, a carrier layer 7 of 0.5 mm is joined, by means of an additional layer of adhesive 4a of 30 µm. Finally both parts have been joined, by means of another layer of adhesive 4a of 30 µm, binding the reflective layer 5 and the semi-reflective layer 11.

Fig. 9 shows a second embodiment of a dual layer DVD, produced according to the method of the present invention. The structure of this disc is the same as the one, shown in Fig. 8, except that each foil 3 comprises a hard coat 10 of 5 µm each.

Although specific embodiments of the invention have been described and illustrated, it is to be understood that a variety of modifications which do not depart from the scope and spirit of the invention will be evident for persons of ordinary skill in the art from the foregoing disclosure. The following claims are intended to cover the specific embodiments set forth herein as well as such modifications, variations, and equivalents.

## Claims

1. A method for producing optical discs comprising:
- at least one foil (3),
- at least one layer of adhesive (4),
- a carrier layer (7),
**characterised by** the following steps:
- copying a pit structure of an optical stamper (2) by applying the at least one foil (3) and/or by applying the at least one layer of adhesive (4) and/or by applying the carrier layer (7) on the pit structure of the optical stamper (2),
- removing the at least one foil (3) and/or the at least one layer of adhesive (4) and/or the carrier layer (7) from the pit structure of the optical stamper (2),
- joining the carrier layer (7) with the at least one foil (3) and the at least one layer of adhesive (4).

2. The method according to claim 1, wherein in a first step the foil is applied to the pit structure of the optical stamper (2) and afterwards joined with the at least one layer of adhesive (4) and the carrier layer (7).

3. The method according to claim 1, wherein in a first step the carrier layer (7) is applied to the pit structure of the optical stamper (2) and afterwards joined with the at least one layer of adhesive (4) and the foil (3).

4. The method according to claim 1, wherein in a first step the layer of adhesive (4) and the at least one foil (3) are joined, and afterwards the pit structure of the optical stamper (2) is copied to the at least one layer of adhesive (4) joined with the at least one foil (3).

5. The method according to claim 1, wherein in a first step the layer of adhesive and the carrier layer (7) are joined, and afterwards the pit structure of the optical stamper (2) is copied to the at least one layer of adhesive (4) joined with the carrier layer (7).

6. The method according to one of the claims 1 to 5, wherein the at least one foil (3) is flexible.

7. The method according to one of the claims 1 to 6, wherein the at least one foil (3) comprises polycarbonate.

8. The method according to one of the claims 1 to 7, wherein the at least one foil (3) has a thickness between 50 µm and 150 µm, preferably between 75 µm and 125 µm.

9. The method according to one of the claims 1 to 8, wherein the pit structure of the optical stamper (2) is embossed to the at least one foil (3) and/or the at least one layer of adhesive (4) and/or the carrier layer (7).

10. The method according to claim 9, wherein the pit structure of the optical stamper (2) is embossed to the at least one foil (3) and/or the at least one layer of adhesive (4) and/or the carrier layer (7) using a pressure-sensitive adhesive embossing process.

11. The method according to one of the claims 1 to 10, wherein the at least one layer of adhesive has a thickness between 5 µm and 60 µm, preferably between 10 µm and 40 µm.

12. The method according to one of the claims 1 to 11, wherein the at least one layer of adhesive (4) is cured, before the at least one layer of adhesive (4) is removed from the optical stamper (2).

13. The method according to claim 12, wherein the at least one layer of adhesive (4) is cured using UV radiation before the at least one foil (3) is removed from the optical stamper (2).

14. The method according to one of the claims 1 to 13, wherein the at least one foil (3) comprises a hard coat (10).

15. The method according to claim 14, wherein the hard coat (10) has a thickness between 0.5 µm and 10 µm, preferably between 1 µm and 7 µm.

16. The method according to one of the claims 1 to 15, wherein the at least one foil (3) and/or the layer of adhesive and/or the hard coat (10) have an index of refraction of substantially 1.5.

17. The method according to one of the claims 1 to 16, wherein at least one reflection layer (5) is applied to the at least one foil (3) and/or the at least one layer of adhesive (4) and/or the carrier layer (7).

18. The method according to claim 17, wherein the thickness of the at least one reflection layer (5) is between 0.1 µm and 10 µm, preferably between 0.5 µm and 5 µm.

19. The method according to one of the claims 1 to 18, wherein the carrier layer (7) comprises a layer of lacquer (9).

20. The method according to one of the claims 1 to 19, wherein the carrier layer (7) comprises a solid disc.

21. The method according to one of the claims 1 to 20, wherein the carrier layer (7) is realized by a hard coat (10).

22. The method according to one of the claims 1 to 21, wherein the carrier layer (7) has a thickness between 0.2 mm and 1 mm, preferably between 0.4 mm and 0.8 mm.

23. The method according to one of the claims 1 to 21, wherein the carrier layer (7) has a thickness between 0.7 mm and 1.5 mm, preferably between 0.9 mm and 1.3 mm.

24. The method according to one of the claims 1 to 23, wherein the copy of a pit structure of a second optical stamper is arranged in the foil (3) and/or in the at least one layer of adhesive (4) and/or the carrier layer (7).

25. The method according to claim 24, wherein a semi-reflective layer (11) is applied to the copy a first optical stamper and and a reflective layer (5) is applied to the copy a second optical stamper.

26. The method according to one of the claims 1 to 25, wherein a cover layer (8) is joined with the side of the at least one foil (3) on the side of the foil which is closer to an optical head in the read-out process of the optical disc.

27. The method according to claim 26, wherein the cover layer (8) comprises transparent material.

28. The method according to claim 26 or 27, wherein the cover layer (8) has a thickness between 0.7 mm and 1.5 mm, preferably between 0.9 mm and 1.3 mm.

29. The method according to claim 26 or 27, wherein the cover layer (8) has a thickness between 0.1 mm and 1 mm, preferably between 0.3 mm and 0.7 mm.

30. An optical disc, comprising at least one foil (3), at least one layer of adhesive (4) and a carrier layer (7), produced according to one of the claims 1 to 27.

31. An optical disc according to claim 30, wherein the at least one foil (3) comprises of flexible material, preferably polycarbonate.

32. An optical disc according to claim 30 or 31, wherein the at least one foil (7) comprises a hard coat (10).

33. An optical disc according to one of the claims 30 to 32, wherein the at least one foil (3) and/or the at least one layer of adhesive (4) and/or the carrier layer (7) comprises at least one reflection layer (5).

34. An optical disc according to one of the claims 30 to 33, wherein a, preferably transparent, cover layer (8) is joined with the at least one foil (3) and the at least one layer of adhesive (4) and the carrier layer (7).

35. An optical disc according to one of the claims 30 to 34, wherein the copy of a pit structure of a second optical stamper is arranged in the foil (3) and/or in the at least one layer of adhesive (4) and/or the carrier layer (7).
